# EUROPEAN PATENT APPLICATION

(11) **EP 4 541 623 A1**
(43) Date of publication of application: **23.04.2025**
(21) Application number: 24205588.7
(22) Date of filing: 09.10.2024
(51) Int. Cl.: B60K 1/04, B60K 1/00

(54) **ELECTRIC AUTOMOBILE**

(30) Priority: 10.10.2023 JP 2023175058
(71) Applicant: MAZDA MOTOR CORPORATION, Hiroshima 730-8670 (JP)
(72) Inventor: Kaneko, Naoki, Aki-gun, Hiroshima, 730-8670 (JP); Mochizuki, Masanori, Aki-gun, Hiroshima, 730-8670 (JP)
(74) Representative: von Tietzen und Hennig, Nikolaus

(57) **Abstract**

An electric automobile, in which a driver's seat and an assistant driver's seat are provided in line in a vehicle width direction, comprises an assistant-driver's-seat side battery unit installed at an assistant-driver's-seat side of a vehicle body, and a motor to drive a driving wheel when receiving supply of electric power from the assistant-driver's-seat side battery unit. The assistant-driver's-seat side battery unit is positioned on a vehicle forward side of a hip point of a driver seated in the driver's seat and also on the vehicle forward side of a cushion portion which forms a sitting face of the assistant driver's seat.

## Description

### BACKGROUND OF THE INVENTION

The present invention relates to an electric automobile comprising a motor to drive a driving wheel and a battery to supply electric power to the motor.

In the electric automobile with the motor to drive the driving wheel, the traveling distance is greatly affected by the installation quantity of the battery to supply the electric power to the motor. In a case of an electric automobile disclosed in Japanese Patent Laid-Open Publication No. 2011-1950566, for example, a battery is installed in a tunnel portion formed at a floor panel and also below a rear seat, thereby increasing the installation quantity of the battery. Since the battery installed in the tunnel portion of the floor panel is elongated in a longitudinal direction because of a longitudinally-long shape of the tunnel portion, the size, in a vertical direction, of a front-end portion of the battery is longer than that, in the vertical direction, of a middle portion (longitudinally middle portion) of the battery. Meanwhile, since the rear seat is long in a lateral direction, the battery installed below the rear seat is designed such that it has a laterally-long shape so as to enlarge the battery volume (capacity).

Further, Japanese Patent Laid-Open Publication No. 2008-155828 discloses a structure in which a protrusion portion is formed at a portion of a floor panel which is positioned on an assistant-driver's-seat side (passenger-seat side) and a battery is arranged inside the protrusion portion.

Herein, it is important to reduce the yaw moment of inertia of the vehicle when considering the kinetic performance of the automobile, so that it will be a key issue how to reduce the yaw moment of inertia of the vehicle. Therefore, a layout of a heavy object has been an important factor in designing the automobile.

In general, there may be cases where a driver is only on the vehicle or any other passenger than the driver is also on the vehicle. For example, between a case where a passenger is seated in an assistant driver's seat in addition to the driver and another case where there is no passenger seated in the assistant driver's seat, there exists a weight difference by one person between these cases. This lateral weight difference (imbalance) of the vehicle may cause a big change in the yaw moment of inertia of the vehicle, thereby possibly affecting the kinetic performance of the vehicle.

Herein, while the driver sits in the driver's seat all the time during traveling, there are many cases where no passenger is seated in the assistant driver's seat. Particularly, this tends to happen in the sports traveling.

### SUMMARY OF THE INVENTION

The present invention has been devised in view of the above-described matters, and an object of the present invention is to provide an electric automobile which can properly reduce the yaw moment of inertia, securing a sufficient space for the passenger when the passenger is seated in the assistant driver's seat, even in the case of no passenger seated in the assistant driver's seat.

The present invention is an electric automobile, in which a driver's seat and an assistant driver's seat are provided in line in a vehicle width direction, comprising an assistant-driver's-seat side battery unit installed at an assistant-driver's-seat side of a vehicle body, and a motor operative to drive a driving wheel when receiving supply of electric power from the assistant-driver's-seat side battery unit, wherein the assistant-driver's-seat side battery unit is positioned on a vehicle forward side of a hip point of a driver seated in the driver's seat and also on the vehicle forward side of a cushion portion which forms a sitting face of the assistant driver's seat.

According to this structure, since the assistant-driver's-seat side battery unit is positioned on the vehicle forward side of the cushion portion of the assistant driver's seat, the sufficient space for the passenger seated in the assistant driver's seat can be secured. Herein, the assistant-driver's-seat side battery unit to supply the electric power to the motor is a heavy object. According to the present invention, since the assistant-driver's-seat side battery unit is positioned on the vehicle forward side of the hip point of the driver seated in the driver's seat, the gravity center of the vehicle in the case of no passenger seated in the assistant driver's seat comes to be close to the center of the vehicle, so that the yaw moment of inertia of the vehicle can be reduced.

In the present invention, the assistant-driver's-seat side battery unit may be installed detachably from the vehicle body.

According to this structure, in a case where the relatively-long traveling distance is not required for the vehicle, for example, it is possible to uninstall (detach) the assistant-driver's-seat side battery unit from the vehicle for the purpose of achieving the light weight of the vehicle. Further, the assistant-driver's-seat side battery unit can be charged by an outside charging device.

In the present invention, the electric automobile may further comprise a tunnel portion provided at a central portion, in a vehicle width direction, of a floor panel, protruding upward and extending in a vehicle longitudinal direction, and a center battery unit installed in the tunnel portion and operative to supply electric power to the motor.

According to this structure, since the center battery unit is provided, the gravity center of the vehicle can be close to the center of the vehicle in a top (plan) view, prolonging the traveling distance, thereby reducing the yaw moment of inertia.

In the present invention, said center battery unit may includes a plurality of batteries (B 1) and the batteries (B 1) are arranged such that their weight distribution increases with increasing distance of the battery unit (BY1) to said motor (M) in the vehicle direction.

According to this structure, it can be properly prevented that the longitudinal weight balance of the vehicle becomes too forward or rearward.

In the present invention, the hip point of the driver seated in the driver's seat, the vehicle center, and the gravity center of the assistant-driver's-seat side battery unit may be positioned on an identical liner line in the top view. In other words: the hip point of the driver seated in the driver's seat, the vehicle center, and the gravity center of the assistant-driver's-seat side battery unit may lie on an imaginary straight line in the plan view. In particular, the imaginary line may be inclined with respect to the vehicle width direction and the longitudinal direction of the vehicle, in the plan view. The rear end of the imaginary straight line may be located on the side of the driver's seat.

According to this structure, the yaw moment of inertia can be reduced efficiently when no passenger is seated in the assistant driver's seat.

In the present invention, the motor may be provided on a vehicle rearward side of the center battery unit, a speed-changing gear or a speed-reducing gear, to which a rotational force of the motor is inputted, may be provided on the vehicle rearward side of the motor and at a driver's-seat side of the vehicle body, and a rear-side battery to supply the electric power to the motor may be provided beside the motor and may be positioned behind the assistant-driver's-seat.

According to this structure, since the rear-side battery is provided on the assistant-driver's-seat side which is opposite to the speed-changing gear or the speed-reducing gear as the heavy object, the lateral weight balance of the vehicle can be optimized.

In the present invention, a further rear-side battery unit to supply the electric power to the motor may be provided, the further-side battery unit may be arranged on a side of the motor opposite the rear battery unit and is positioned behind the driver's-seat.

In the present invention, the rear-side battery unit and/or the further rear-side battery unit may be installed detachably from the vehicle body.

In the present invention, the rotational force of the motor outputted from the speed-changing gear or a speed-reducing gear may be transferred to the right and left rear wheels via a deferential mechanism and drive shafts, wherein the motor may be arranged closer to the central portion, in the longitudinal direction, of the vehicle than the drive shafts, the speed-changing or a speed-reducing gear and the deferential mechanism.

In the present invention, the rear-side battery unit and the further rear-side battery unit may be provided in a space before the drive shafts when seen in a longitudinal direction of the vehicle.

In the present invention, the assistant-driver's-seat side battery unit may be provided at a vehicle rear-side portion of a floor panel of the vehicle body which is positioned on the assistant-driver's-seat side. Herein, a vehicle front-side portion of the floor panel which is positioned on the assistant-driver's-seat side can be set as a foot-placement portion where feet of the passenger seated in the assistant driver's seat are usually placed.

According to this structure, since the feet of the passenger seated in the assistant driver's seat can be placed on the vehicle front-side portion of the floor panel, the comfortableness of the passenger seated in the assistant driver's seat can be properly suppressed from being deteriorated even if the assistant-driver's-seat side battery unit is provided.

The present invention will become apparent from the following description which refers to the accompanying drawings.

### BRIEF DESCRIPTION OF THE DRAWINGS

FIG. **1** is a left-side view of an electric automobile according to an embodiment of the present invention.
FIG. **2** is a plan view of the electric automobile according to the embodiment of the present invention.
FIG. **3** is a plan view showing a cabin in a state where a roof, a door, an interior material and others of the electric automobile are omitted.
FIG. **4** is a sectional view taken along line IV-IV of FIG. **3****.**
FIG. **5** is a sectional view taken along line V-V of FIG. **3****.**
FIG. **6** is a perspective view showing a battery unit installed on a vehicle body only.

### DETAILED DESCRIPTION OF THE INVENTION

Hereafter, an embodiment of the present invention will be described specifically referring to the drawings. Herein, the embodiment described below is just an exemplified one of the present invention, and therefore it does not to intend to restrict any application or use of the present invention.

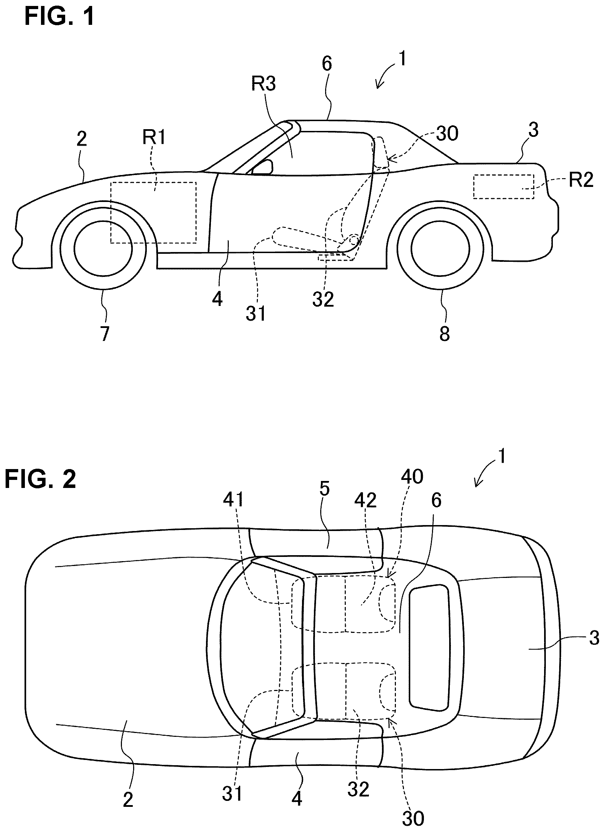

FIGS. **1** and **2** respectively show an exterior of an electric automobile **1** which is provided with a vehicle-body structure **A** according to the embodiment of the present invention. In the description of the present embodiment, a vehicle forward side will be just referred to as the "front (forward) side," a vehicle rearward side will be just referred to as the "rear (rearward) side," a vehicle leftward side will be just referred to as the "left (leftward) side," and a vehicle leftward side will be just referred to as the "left (left) side." A lateral direction of the vehicle corresponds to (matches) a vehicle with direction. A side view of the vehicle means a view of the vehicle when the electric automobile **1** is viewed from the left side or the right side. Further, a view of the vehicle when the electric automobile **1** is viewed from an upper side means a top view or a plan view of the vehicle.

The electric automobile **1** is a passenger car, for example, and may be any type of vehicle, such as a coupe type, a hatch-back type, or a sedan type. The electric automobile **1** has a hood (bonnet hood) **2** at its front side. A front-side baggage loading space **R1** where baggage can be loaded (illustrated by a broken line in FIG. **1** only) is provided below the hood **2.** The front-side baggage loading space **R1** is opened by opening the hood **2,** so that the baggage can be loaded or unloaded.

A rear hood **3** is provided at a rear side of the electric automobile **1.** Below the rear hood **3** is provided a rear-side baggage loading space **R2** where baggage can be loaded (illustrated by a broken line in FIG. **1** only). The rear-side baggage loading space **R2** is opened by opening the rear hood **3,** so that the baggage can be loaded or unloaded. Herein, either one or both of the front-side baggage loading space **R1** and the rear-side baggage loading space **R2** may be set as a space for arranging an auxiliary device therein.

A left-side door **4** and a right-side door **5** are provided to be openable at a left-side portion and a right-side portion of the electric automobile **1.** The roof **6** may be a fixed type, a detachable type, or a foldable type. In a case of the detachable type of the holdable type, the vehicle is an open car with no top above a passenger.

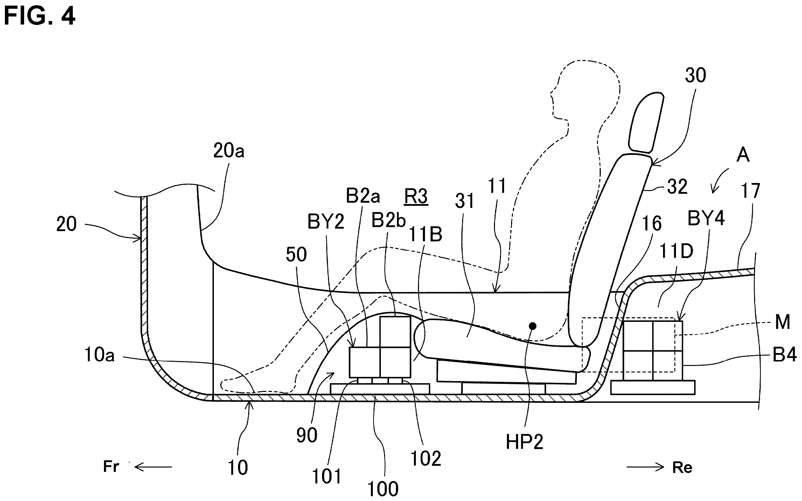

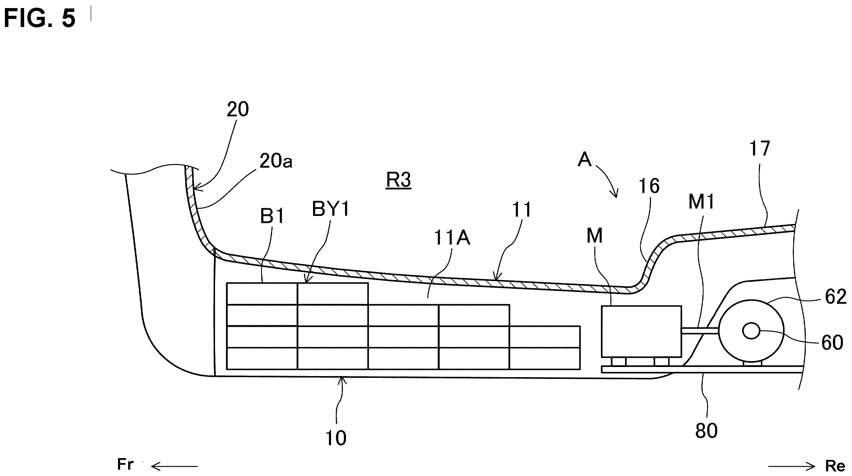

The vehicle-body structure **A** of the electric automobile **1** is equipped with front wheels **7** and rear wheels **8,** and a motor **M** for driving the rear wheels **8** (shown in FIGS. **4** and **5** and hereafter, referred to as the "motor **M"** simply) is provided. An inverter circuit and various sensors which are necessary for controlling the motor **M,** devices for driving operation, and others can be used from any conventionally well-known ones.

While the rear wheel **8** is the driving wheel in the present embodiment, the front wheel 7 may be set as the driving wheel, or both of those 7, 8 may be set as the driving wheels. That depends on how the motor **M** is arranged. That is, in a case where the motor **M** is installed at the rear side of the vehicle only, the rear wheel **8** can be the driving wheel, and also in a case where the motor **M** is installed at the front side of the vehicle only, the front wheel 7 can be the driving wheel. Further, in a case where the plural motors **M** are installed at the front side and the rear side of the vehicle, the both of the wheels **7, 8** can be the driving wheel. Hereinafter, the case where the motor **M** is installed at the rear side of the vehicle only will be described.

As shown in FIG. **1****,** a cabin **R3** as a space for passengers is provided between the front wheels 7 and the rear wheels **8.** As shown in FIG. **4****,** the vehicle-body structure **A** of the electric automobile **1** comprises a floor panel **10** which forms a floor face of the cabin **R3** and a dash panel **20** which forms a front wall of the cabin **R3.** Further, the vehicle-body structure **A** comprises an inclined panel **16** which extends obliquely upward-and-rearward from a rear-end portion of the floor panel and a rear panel **17** which extends rearward from an upper-end portion of the inclined panel **16.**

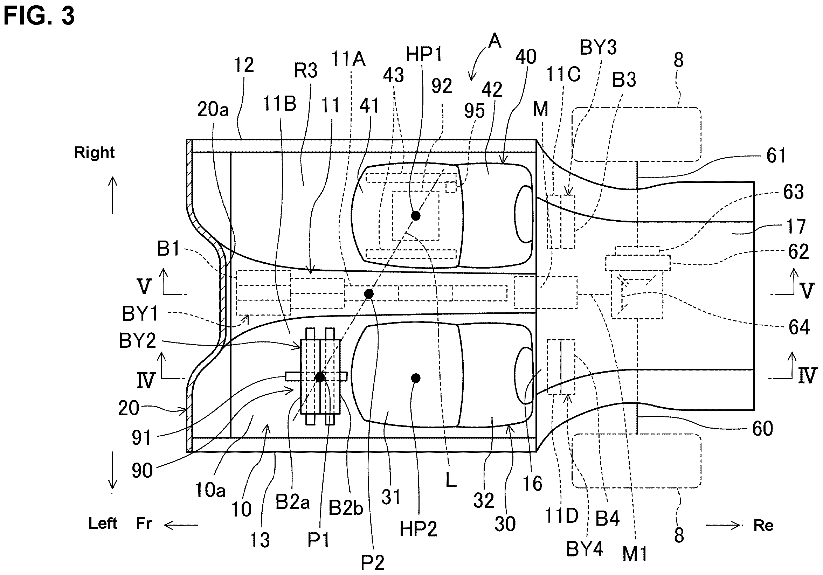

A tunnel portion **11** which protrudes upward and extends in a longitudinal direction is formed at a central portion, in a vehicle width direction, of the floor panel **10.** Respective cabin-side faces of the tunnel portion **11,** the floor panel **10,** and the dash panel **20** are covered with an interior material, not illustrated. As shown in FIG. **3****,** the vehicle-body structure **A** further comprises a right-side side sill **12** which extends in the longitudinal direction along a right edge portion of the floor panel **10** and a left-side side sill **13** which extends in the longitudinal direction along a left edge portion of the floor panel **10.**

A front-end portion of the tunnel portion **11** is positioned at a front-end portion of the floor panel **10,** and a rear-end portion of the tunnel portion **11** is positioned at a rear-end portion of the floor panel **10.** Accordingly, the tunnel portion **11** is continuous from the front-end portion to the rear end of the floor panel **10.**

This electric automobile **1** is right-hand drive. Therefore, the vehicle-body structure **A** is equipped with an assistant driver's seat **30** as a left-side seat and a driver's seat **40** as a right-side seat, which are respectively provided on a left side and a right side of the tunnel portion **11** formed at the floor panel **10.** Specifically, the assistant driver's seat **30** is arranged on the left side of the tunnel portion **11** at the floor panel **10,** and this assistant driver's seat **30** is disposed between the tunnel portion **11** and the left-side side sill **13.** The driver's seat **40** is arranged on the right side of the tunnel portion **11** at the floor panel **10,** and this driver's seat **40** is disposed between the tunnel portion **11** and the right-side side sill **12.** Accordingly, the assistant driver's seat **30** and the driver's seat **40** are provided side by side in the vehicle width direction, interposing the tunnel portion **11** therebetween. Herein, the electric automobile **1** may be left-hand drive, and in this case, the driver's seat **40** may be provided at the left side and the assistant driver's seat **30** may be provided at the right side. Further, a rear seat may be provided as well.

The driver's seat **40** comprises a cushion portion **41** which mainly supports a buttock portion and a thigh portion of the passenger and a back portion **42** which extends upward from a rear end portion of the cushion portion **41** and mainly supports a waist portion, a back portion, and shoulder portions of the passenger. The cushion portion **41** forms a sitting face of the driver's seat **40.** Likewise, the assistant driver's seat **30** comprises a cushion portion **31** and a back portion **32.** In FIG. **3****,** a hip point of the passenger seated in the driver's seat **40** is denoted by a reference character **HP1,** and a hip point of the passenger seated in the assistant driver's seat **30** is denoted by a reference character **HP2.** Herein, while it is assumed that the passenger seated has a standard body size and weight, each position of the hip points **HP1, HP2** does not move so much even when the body size and weight of the passenger changes. In FIG. **4****,** the hip point of the passenger seated in the assistant driver's seat **30** is denoted by the reference character **HP2.**

Herein, in a case where the driver's seat **40** is attached to the floor panel **10** such that it is slidable in the longitudinal, the hip point **HP1** moves in the longitudinal direction according to its slide position. However, the hip point **HP1** where the driver's seat **40** is located at a position where the passenger with the standard body size can take a standard driving position can be made standard. The hip point **HP2** on the assistant-driver's-seat **30** side is the same as well. The assistant driver's seat **30** may be fixedly attached to the floor panel **10** without being slidable in the longitudinal direction.

An upper end portion of the tunnel portion **11** is located at a higher level than each upper face of the cushion portions **31, 41.** Thereby, an installation space where a center battery unit **BY1** described later is installed in the tunnel portion **11** can be securely expanded in a height direction.

As shown in FIGS. **4** and **5****,** the protrusion height of the tunnel portion **11** from the level of the floor panel **10** (the protrusion height from the level of a portion where the assistant driver's seat **30** and the river's seat **40** are attached) becomes higher while going vehicle forward. Accordingly, the upper end portion of the tunnel portion **11** is inclined gently such that its rear side becomes low. The assistant driver's seat **30** and the driver's seat **40** are positioned beside a rear-side portion of the tunnel portion **11,** and the rear-side portion of the tunnel portion **11** overlaps the assistant driver's seat **30** and the driver's seat **40** in a side view. Since the height of the overlapping portion of the tunnel portion **11** with the assistant driver's seat **30** and the driver's seat **40** in the side view becomes low, it becomes possible that the passenger (driver) seated in the driver's seat **40** moves onto the assistant driver's seat **30** beyond the tunnel portion **11,** or the passenger seated in the assistant driver's seat **30** moves onto the driver's seat **40** beyond the tunnel portion **11.**

Further, as shown in FIG. **3****,** the width (lateral size) of the tunnel portion **11** becomes wider while going forward. Specifically, the distance between the left-side wall and the right-side wall of the tunnel portion **11** becomes narrower while going rearward, and the width of the rear-side portion of the tunnel portion **11** is narrower than that of a front-side portion of the tunnel portion **11.** Since the width of the overlapping portion of the tunnel portion **11** with the assistant driver's seat **30** and the driver's seat **40** in the side view is narrow, the sufficient width of each of the assistant driver's seat **30** and the driver's seat **40** can be secured, suppressing the vehicle width from being improperly wide.

Herein, since the front portion of the tunnel portion **11** is a portion which does not overlap the assistant driver's seat **30** and the driver's seat **40** in the side view, there is no problem in securing the width of the assistant driver's seat **30** and the driver's seat **40** by enlarging the width of the front portion of the tunnel portion **11.**

The dash panel **20** extends upward and in the vehicle width direction from the front-end portion of the floor panel **10,** and is a member to partition the cabin **R3** from its font-side space. A protrusion portion **20a** which protrudes toward an inside of the cabin **R3** is provided at a central portion, in the vehicle width direction, of the dash panel **20.** As shown in FIG. **5****,** a lower-end portion of the protrusion portion **20a** is continuous to the front-end portion of the tunnel portion **11.**

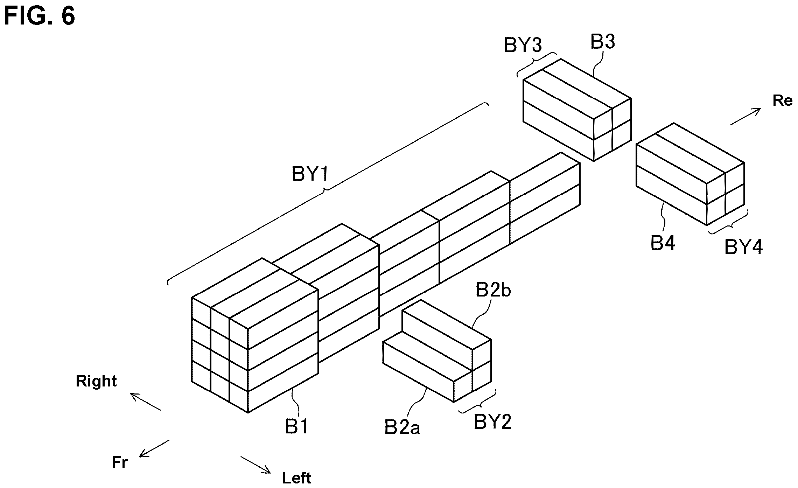

As shown in FIGS. **3 - 6**, the vehicle-body structure **A** comprises the center battery unit **BY1,** an assistant-driver's-seat side battery unit **BY2,** a rear-right side battery unit **BY3,** and a rear-left side battery unit **BY4.** In the present embodiment, the plural battery units **BY1 - BY4** are arranged at various portions of a vehicle body, so that the installation quantity (volume, capacity) of the battery can be increased by utilizing plural spaces formed at the various portions of the vehicle body.

The center battery unit **BY1** is installed in the tunnel portion **11.** In the tunnel **11,** a center-battery arrangement portion (second battery arrangement portion) **11A** to install the center battery unit **BY1** is provided to extend in the longitudinal direction, and the center battery unit **BY1** arranged at the center-battery arrangement portion **11A** is detachably attached to the floor panel **10** or the like (in a replaceable manner). A front-end portion of the center battery unit **BY1** in its fixed state to the floor panel **10** or the like is positioned on a rearward side of the dash panel **20.** Thereby, any battery as a heavy object does not exist at the front-side portion of the vehicle.

The center battery unit **BY1** includes plural batteries (center batteries) **B1** which are provided in line along the longitudinal direction, and these batteries **B1** supply electric power to the motor **M.** The motor **M** drives the rear wheels **8** by receiving the electric power from the center battery unit **BY1.** The center battery unit **BY1** may comprise a battery case to install the center batteries **B1,** a sensor to detect the temperature of the center batteries **B1,** a heat exchanger to adjust the temperature of the center batteries **B1,** and others, which are not illustrated.

The center battery **B1** is made of a chargeable/dischargeable secondary battery (battery cell) or the like. However, this battery **B1** may be made of a lithium-ion battery, a solid-state battery, or the like. Any other secondary battery is applicable. The center battery **B1** may be a so-called battery cell or a battery pack to store battery cells. While the drawings illustrate the center battery **B1** in a rectangular-parallelepiped shape, but this is not limited to this shape. Further, the center batteries **B1** are all the same.

The motor **M** drives the rear wheels **8,** and therefore it is provided at a rear side of the vehicle body, specifically, on the rearward side of the center battery unit **BY1.** The center battery unit **BY1** is configured such that its weight becomes heavier while being separated from the motor **M,** i.e., while going forward. For example, as shown in FIG. **3****,** the center battery unit **BY1** is configured such that its width (its lateral size), in the top view, becomes wider while being separated from the motor **M.** Specifically, the center batteries **B1** constituting the center battery unit **BY1** are disposed in line in the vehicle longitudinal direction which corresponds to (match) a batteries' longitudinal direction. The foremost-positioned center batteries **B1** are arranged such that three of batteries are in line in the vehicle width direction. The second-positioned center batteries **B1** are arranged such that two of batteries are in line in the vehicle width direction. The third-positioned, fourth-positioned, and rearmost-positioned center batteries **B1** are respectively arranged such that a single line of batteries extends in the longitudinal direction. That is, those batteries **B1** are not in line in the vehicle width direction.

Further, the center battery unit **BY1** is configured such that the size, in a vertical direction, thereof becomes longer while being separated from the motor **M.** As shown in FIG. **5****,** the foremost-positioned center batteries **B1** and the second-positioned center batteries **B1** are arranged such that four of batteries are in line in the vehicle direction. The third-positioned center batteries **B1** and the fourth-positioned center batteries **B1** are arranged such that three of batteries are in line in the vehicle direction. The rearmost-positioned center batteries **B1** are arranged such that two of batteries are in line in the vehicle direction. The number of the center batteries **B1** stacked in the vertical direction can be also called a stack number or a step number.

That is, the center batteries **B1** are arranged such that the width of the center battery unit **BY1** becomes wider while being separated from the motor **M** and, that the size, in the vertical direction, of the center battery unit **BY1** becomes longer while being separated from the motor **M.** Accordingly, the front-end portion of the center battery unit **BY1** is the heaviest and a rear-end portion of the center battery unit **BY1** is the lightest. A middle portion, in the longitudinal direction, of the center battery unit **BY1** has a middle weight between the weight of the front-end portion and the weight of the rear-end portion.

The assistant driver's seat **30** and the driver's seat **40** are positioned beside the third-positioned, fourth-positioned and rearmost-positioned center batteries **B1** of the center battery unit **BY1.** Meanwhile, the foremost-positioned and second-positioned center batteries **B1** of the center battery unit **BY1** are arranged on the forward side of the assistant driver's seat **30** and the driver's seat **40.** That is, since the center batteries **B1** of the center battery unit **BY1** are not arranged in line in the vehicle width direction between the assistant driver's seat **30** and the driver's seat **40,** the width of the portion of the center battery unit **BY1** where the center batteries **B1** are not arranged in line is set to be narrower than that of the portion of the center battery unit **BY1** which is positioned on the forward side of the assistant driver's seat **30** and the driver's seat **40.** The width of the center battery unit **BY1** becomes narrower while going rearward, corresponding to the width of the tunnel portion **11.**

Further, the stack (step) number of the foremost-positioned and second-positioned center batteries **B1** of the center battery unit **BY1** is the most, the stack (step) number of the third-positioned and fourth-positioned center batteries **B1** is fewer, and the stack (step) number of the rearmost-positioned center batteries **B1** is the fewest. Thereby, the center battery unit **BY1** is configured such that its height becomes higher while going forward, corresponding to the protrusion height of the tunnel portion **11.**

The number, the longitudinally-arranged number, and the stack number of the center batteries **B1** constituting the center battery unit **BY1** are not limited to the above-described ones, and any number is applicable. That is, as long as those numbers of the center batteries **B1** are appropriately set such that the battery unit **BY1** becomes heavier while being separated from the motor **M,** any number more than two (including two) is applicable as the longitudinally-arranged number and also any number more than one (including one) is applicable as the stack number.

The assistant-driver's-seat side battery unit **BY2** is arranged at a portion of the floor panel **10** which is positioned on the forward side of the cushion portion **31** of the assistant driver's seat **30.** The assistant-driver's-seat side battery arrangement portion (third battery arrangement portion) **11B** where the assistant-driver's-seat side battery unit **BY2** is arranged is provided on the forward side of the assistant driver's seat **30.** Specifically, the assistant-driver's-seat side battery unit **BY2** is arranged at a rear-side portion of the floor panel **10** which is positioned on the assistant-driver's-seat side, whereas a front-side portion of the floor panel **10** which is positioned on the assistant-driver's-seat side is set as a foot-placement portion **10a** where feet of the passenger seated in the assistant driver's seat **30** are placed. The passenger having the standard body size seems not to place the passenger's feet just before the cushion portion **31** of the assistant driver's seat, but this passenger tends to place the feet forward away from the cushion portion **31,** stretching the passenger's legs. In the present embodiment, since the assistant-driver's-seat side battery unit **BY2** does not exist at the portion forward away from the cushion portion **31** and also the foot-placement portion **10a** is provided, the comfortableness of the passenger seated in the assistant driver's seat **30** can be improved, installing the batteries **B2** on the side of the assistant driver's seat **30.**

A positional relationship of the assistant-driver's-seat side battery unit **BY2** and the hip point **HP1** of the passenger seated in the driver's seat **40** will be described. The assistant-driver's-seat side battery unit **BY2** is positioned on the forward side of the hip point **HP1** of the passenger seated in the driver's seat **40.** In FIG. **3****,** the gravity center of the assistant-driver's-seat side battery unit **BY2** is denoted by a reference character **P1,** whereas the center of the vehicle (in the longitudinal direction and in the width direction) is denoted by a reference character **P2.** In the plan (top) view, the hip point **HP1** of the passenger seated in the driver's seat **40,** the vehicle center **(P2),** and the gravity center **(P1)** of the assistant-driver's-seat side battery unit **BY2** are positioned on an identical liner (straight) line (illustrated by an imaginary line **L).** This imaginary line **L** is inclined, in the plan view, such that its rear side is located on the side of the driver's seat **40.**

The assistant-driver's-seat side battery unit **BY2** includes the plural assistant-driver's-seat side batteries **B2** like the center batteries **B1** which constitutes the center battery unit **BY1.** These assistant-driver's-seat side batteries **B2** are also operative to supply the electric power to the motor **M.** The assistant-driver's-seat side battery unit **BY2** may comprise a battery case, a sensor to detect the temperature of the assistant-driver's-seat side batteries **B2,** a heat exchanger to adjust the temperature of the assistant-driver's-seat side batteries **B2,** and others.

An upper-end portion of the assistant-driver's-seat side battery unit **BY2** is located at a lower level than an upper face of the front-end portion of the cushion portion **31** of the assistant driver's seat **30.** The assistant-driver's-seat side battery unit **BY2** is configured such that its level becomes lower while going forward. That is, the three assistant-driver's-seat side batteries **B2** in a state where their longitudinal directions match the vehicle width direction are arranged in line in the longitudinal direction, the foremost-positioned assistant-driver's-seat side battery **B2** is the one-stack (step) battery, but the second-positioned and rearmost-positioned assistant-driver's-seat side batteries **B2** are the two-stack (step) battery. The height of the upper-end portion of the assistant-driver's-seat side batteries **B2** is lower than the upper face of the front-end portion of the cushion portion **31** of the assistant driver' seat **30.** Thereby, the assistant-driver's-seat side battery unit **BY2** may not contact easily a back face of the thigh portion of the passenger seated in the assistant driver's seat **30,** so that the comfortableness of the passenger seated in the assistant driver's seat **30** can be improved. Herein, the assistant-driver's-seat side batteries **B2** are covered with a battery cover **50** (shown in FIG. **4** only). The battery cover **50** may be made of a soft material, such as cloth or synthetic leather, or a hard resign material. The battery cover **50** may be a member which constitutes part of the assistant-driver's-seat side battery unit **BY2.**

The foremost-positioned assistant-driver's-seat side batteries **B2** is a front-side battery, and the rearmost-positioned assistant-driver's-seat side batteries **B2** is a rear-side battery. The rearmost-positioned assistant-driver's-seat side batteries **B2** are the two-stack batteries, and the foremost-positioned assistant-driver's-seat side batteries **B2** are the one-stack batteries. Accordingly, the rearmost-positioned assistant-driver's-seat side batteries **B2** is higher than the foremost-positioned assistant-driver's-seat side batteries **B2.**

Further, in the present embodiment, the hip point **HP2** of the passenger seated in the assistant's seat **30** is set to be lower than an upper face of a rear side of the assistant-driver's-seat side batteries **B2.** That is, legs of the passenger seated in the assistant driver's seat **30** take a shape such that their front sides become higher while approaching their knees from the hip point **HP2.** By setting the level of the upper face of the rear side of the assistant-driver's-seat side batteries **B2** above the hip point **HP2** according to this shape of the passenger's legs, the installation quantity of the assistant-driver's-seat side batteries **B2** can be increased.

The number, the longitudinally-arranged number, and the stack number of the assistant-driver's-seat side batteries **B2** constituting the assistant-driver's-seat side battery unit **BY2** are not limited to the above-described ones, and any number is applicable. That is, as long as those numbers of the assistant-driver's-seat side batteries **B2** are appropriately set such that the height of the assistant-driver's-seat side battery unit **BY2** becomes lower while going forward, any number more than two (including two) is applicable as the longitudinally-arranged number and also any number more than one (including one) is applicable as the stack number. The assistant-driver's-seat side batteries **B2** may be positioned such that its longitudinal direction matches the vehicle width direction or the vehicle longitudinal direction.

The assistant-driver's-seat side battery unit **BY2** is detachably installed on the vehicle body, i.e., on the floor panel **10.** Specifically, as shown in FIG. **4****,** an attaching/detaching mechanism **14** of the assistant-driver's-seat side battery unit **BY2** is provided at the floor panel **11** on the side of the assistant driver's seat **30.** The attaching/detaching mechanism **14** comprises a body portion **14a** which is fixed to the floor panel **10** on the side of the assistant driver's seat **30** and an engagement portion **14b** which is provided at the body portion **14a** and engages with the assistant-driver's-seat side battery unit **BY2.** The engagement portion **14b** is configured to move between an engaging position where it engages with the assistant-driver's-seat side battery unit **BY2** and an un-engaging position where it is released from the assistant-driver's-seat side battery unit **BY2.** By shifting the engagement portion **14b** to the engaging position in a state where the assistant-driver's-seat side battery unit **BY2** is installed, the assistant-driver's-seat side battery unit **BY2** comes to be fixed to the floor panel **10** so that it cannot be moved by vibrations during vehicle traveling or the like. Meanwhile, when the assistant-driver's-seat side battery unit **BY2** is detached from the vehicle, the engagement portion **14b** is shifted to the un-engaging position from the engaging position.

The attaching/detaching mechanism **14** of the assistant-driver's-seat side battery unit **BY2** can be provided as needed. Further, the structure of the attaching/detaching mechanism **14** is not limited to the above-described one, and any type of structure, such as an attaching structure where the assistant-driver's-seat side battery unit **BY2** is fastened to the floor panel **10** or a bracket (not illustrated) or the like by using screws or a band, or an engaging structure where a hook is used, is applicable.

In a case where the electric automobile **1** gives higher priority to the light weight than the traveling distance, for example, the electric automobile **1** can be traveled without the assistant-driver's-seat side battery unit **BY2.** Further, the assistant-driver's-seat side battery unit **BY2** can be also detached in order to secure the sufficient sitting space for the passenger seated in the assistant driver's seat **30.** The assistant-driver's-seat side battery unit **BY2** may be detached for the higher priority of the longitudinal or lateral weight balance than the traveling distance of the electric automobile **1.** In this case, since the weight balance of the electric automobile **1** can be adjected by using the assistant-driver's-seat side battery unit **BY2,** the assistant-driver's-seat side battery unit **BY2** can be used as part of a weight-balance adjusting means. Moreover, part of the plural assistant-driver's-seat side batteries **B2** constituting the assistant-driver's-seat side battery unit **BY2** may be configured to be detachable. Additionally, the plural assistant-driver's-seat side batteries **B2** constituting the assistant-driver's-seat side battery unit **BY2** may be divided into plural groups, and their groups may be configured to be detachable separately.

As shown in FIGS. **3** and **5****,** the motor **M** is attached to a subframe **80** which is provided below a rear portion of the vehicle body, and it is arranged below the inclined panel **16** and the rear panel **17** at a middle portion, in the vehicle width direction, of the vehicle body. The motor **M** is arranged such that its output shaft **M1** extends in the longitudinal direction. In the present embodiment, the output shaft **M1** of the motor **M** projects rearward. A front-side portion of the motor **M** is arranged in the tunnel portion **11.** Thus, since the installation position of the motor **M** is set to be as forward as possible, the motor **M** is arranged such that it overlaps at least part of the back portion **32** of the assistant driver's seat **30** in the side view shown in FIG. **4****.** In the side view, for example, the motor **M** can be arranged such that a lower-side portion of the back portion **32** and the front-side portion of the motor **M** overlap each other. Thereby, the motor **M** can be positioned near the center of the vehicle.

The vehicle-body structure **A** comprises a left-side drive shaft **60** and a right-side drive shaft **61** which are provided in back of the tunnel portion **11** formed at the floor panel **10** and transmit a rotational force of the motor **M** to the rear wheels **8** as the driving wheels. The left-side drive shaft **60** and the right-side drive shaft **61** extend in the vehicle width direction. The motor **M** is provided between the tunnel portion **11** and the left-side and right-side drive shafts **60, 61.** Accordingly, the motor **M** is arranged closer to the central portion, in the longitudinal direction, of the vehicle than the drive shafts **60, 61.** Herein, in a case where the motor is provided at the front side and drive the front wheels **7,** which is not illustrated, the left-side and right-side drive shafts can be provided in front of the tunnel portion **11.**

The vehicle-body structure **A** further comprises a transmission **62** and a deferential gear box **63.** The transmission **62** and the deferential gear box **63** are attached to the sub frame **80.** The transmission **62** and the deferential gear box **63** are arranged behind the motor **M** and on the side of the driver's seat **40** at the vehicle body. The rotational force of the output shaft **M1** of the motor **M** is inputted to the transmission **62** via a gear **64.** The rotational force of the output shaft **M1** extending in the longitudinal direction is transferred to a rotational force around an axis extending in the vehicle width direction and inputted to the transmission **62.** The transmission **62** is a speed-changing gear or a speed-reducing gear. In a case where the transmission **62** is the speed-changing gear, it may be a stepped transmission or a non-stage transmission. The transmission **62** and the deferential gear box **63** may be integrated, or gears to constitute a transmission and gears to constitute a deferential mechanism may be installed in a single gear box. The motor **M** and the transmission **62** may be modularized. Herein, in a case where the motor **M** is provided at the front side of the vehicle body and drives the front wheels **7,** the transmission **62** and the deferential gear box **63** can be provided in front of the tunnel portion **11,** which is not illustrated.

The rotational force of the motor **M** which is outputted from the transmission **62** is transferred to the right-and-left rear wheels **8** via a deferential mechanism (not illustrated) stored in the deferential gear box **63** and the drive shafts **60, 61.**

As shown in FIG. **3****,** the rear-right side battery unit **BY3** is provided behind the driver's seat **40.** The inclined panel **16** is positioned in back of the driver's seat **40,** and a rear-right side battery arrangement portion (first battery arrangement portion) **11C** where the rear-right side battery unit **BY3** can be arranged is provided in back of the inclined panel **16** (outside the cabin **R3).** The rear-right side battery unit **BY3** comprises plural rear-right side batteries **B3** like the center batteries **B1** constituting the center battery unit **BY1.** The rear-right side batteries **B3** are operative to supply the electric power to the motor **M** as well. The rear-right side battery unit **BY3** may comprise a battery case, a sensor to detect the temperature of the rear-right side batteries **B3,** a heat exchanger to adjust the temperature of the rear-right side batteries **B3,** and others.

Further, the rear-left side battery unit **BY4** is provided behind the assistant driver's seat **30.** The inclined panel **16** is positioned in back of the assistant driver's seat **30,** and a rear-left side battery arrangement portion (first battery arrangement portion) **11D** where the rear-left side battery unit **BY4** can be arranged is provided in back of the inclined panel **16** (outside the cabin **R3).** The rear-left side battery unit **BY4** comprises plural rear-left side batteries (rear-side battery) **B4 like** the center batteries **B1** constituting the center battery unit **BY1.** The rear-left side batteries **B4** are operative to supply the electric power to the motor **M** as well. The rear-left side battery unit **BY4** may comprise a battery case, a sensor to detect the temperature of the rear-left side batteries **B4,** a heat exchanger to adjust the temperature of the rear-left side batteries **B4,** and others.

The rear-right side battery arrangement portion **11C** and the rear-left side battery arrangement portion **11D** are provided relatively on the forward side of the transmission **62.** The rear-right side battery arrangement portion **11C** and the rear-left side battery arrangement portion **11D** are further provided on the both sides, in the vehicle width direction, of the motor **M.** That is, the motor **M** is arranged between the rear-right side batteries **B3** and the rear-left side batteries **B4,** and also provided such that at least part of the rear-right side batteries **B3** and the rear-left side batteries **B4** overlap the motor **M** in the side view. Since the rear-right side batteries **B3** and the rear-left side batteries **B4** are provided at the both sides, in the vehicle width direction, of the motor **M,** respectively, these can be called side batteries.

The number, the longitudinally-arranged number, and the stack number of the rear-right side batteries **B3** constituting the rear-right side battery unit **BY3** can be set arbitrarily. Further, the number, the longitudinally-arranged number, and the stack number of the rear-left side batteries **B4** constituting the rear-left side battery unit **BY4** can be set arbitrarily as well. The rear-right side batteries **B3** and the rear-left side batteries **B4** may be arranged such that their longitudinal direction match the vehicle width direction or the longitudinal direction. Further, the rear-right side battery unit **BY3** and the rear-left side battery unit **BY4** may be detachable.

### (Effects of Embodiment)

As described above, according to the vehicle-body structure **A** of the electric automobile **1** of the present embodiment, since the floor panel **10** is provided between the front wheels **7** and the rear wheels **8,** i.e., at the middle portion, in the longitudinal direction, of the vehicle, and the tunnel portion **11** of the floor panel **10** is provided at the central portion, in the vehicle width direction, of this floor panel **10,** the heavy object can be positioned near at the center of the vehicle by installing the center battery unit **BY1** in the tunnel portion **11.** Thereby, the yaw moment of inertia can be properly reduced. Further, since the center battery unit **BY1** is configured such that its weight becomes heavier while being separated from the motor **M,** it can be properly prevented that the longitudinal weight balance of the vehicle becomes too forward or rearward.

Further, since the assistant-driver's-seat side battery unit **BY2** is arranged on the forward side of the cushion portion **31** of the assistant driver's seat **30,** the sitting space for the passenger seated in the assistant driver's seat **30** can be secured. Herein, the assistant-driver's-seat side battery unit **BY2** is one of the heavy objects because it is operative to supply the electric power to the motor **M.** However, since the assistant-driver's-seat side batteries **B2** is positioned on the vehicle forward side of the hip point **HP1** of the passenger seated in the driver's seat **40,** the gravity center of the vehicle with no passenger seated in the assistant driver's seat **30** comes to be near the center of the vehicle, so that the yaw moment of inertia can be properly reduced.

Further, when viewed in the vehicle longitudinal direction, the tunnel portion **11** of the floor panel 10, the motor **M,** and the drive shafts **60, 61** are arranged in line in this order. Accordingly, the motor **M** of the heavy object is closer to the central portion, in the longitudinal direction, of the vehicle than the drive shafts **60, 61.** Moreover, since at least each part of the rear-right side battery unit **BY3** and the rear-left battery unit **BY4** overlaps the motor **M** in the side view, the battery units **BY3, BY4** are closer to the central portion, in the longitudinal direction, of the vehicle than the drive shafts **60, 61.** Therefore, an effective layout for the yaw moment of inertia, including the rear-right side battery unit **BY3** and the rear-left battery unit **BY4,** can be attained. Additionally, since the rear-right side battery unit **BY3** and the rear-left battery unit **BY4** are provided in a space before the drive shafts **60, 61,** the sufficient installation quantity of the battery can be secured.

The above-described embodiment just shows an exemplified sample of the present invention, and therefore the present invention should not be construed based on this embodiment. Any modification or change is applicable within the scope of the claims of the present invention. For example, either one of the rear-right side battery unit **BY3** and the rear-left battery unit **BY4** may be provided only. The motor **M** may be disposed on the left side or on the right side of the vehicle body. The motor **M** may be arranged such that its output shaft **M1** extends in the vehicle width direction.

As described above, the present invention is usable for the electric automobile in which the motor for drive and the battery are installed.

## Claims

1. An electric automobile (1), in which a driver's seat (40) and an assistant driver's seat (30) are provided in line in a vehicle width direction, comprising:
an assistant-driver's-seat side battery unit (BY2) installed at an assistant-driver's-seat side of a vehicle body; and
a motor (M) operative to drive a driving wheel (8) when receiving supply of electric power from the assistant-driver's-seat side battery unit (BY2),
wherein said assistant-driver's-seat side battery unit (BY2) is positioned on a vehicle forward side of a hip point (HP1) of a driver seated in the driver's seat (40) and also on the vehicle forward side of a cushion portion (31) which forms a sitting face of the assistant driver's seat (30).

2. The electric automobile of claim 1, wherein said assistant-driver's-seat side battery unit (BY2) is installed detachably from the vehicle body.

3. The electric automobile of claim 1, further comprises a tunnel portion (11) provided at a central portion, in a vehicle width direction, of a floor panel (10), protruding upward and extending in a vehicle longitudinal direction, and a center battery unit (BY1) installed in said tunnel portion (11) and operative to supply electric power to said motor (M).

4. The electric automobile of claim 3, wherein said center battery unit (BY1) includes a plurality of batteries (B1) and the batteries (B 1) are arranged such that their weight distribution increases with increasing distance of the battery unit (BY1) to said motor (M) in the vehicle direction.

5. The electric automobile of claim 1, wherein the hip point (HP1) of the driver seated in the driver's seat (40), a vehicle center (P2), and a gravity center (P1) of said assistant-driver's-seat side battery unit (BY2) are positioned on an identical liner line (L) in a top view.

6. The electric automobile of claim 3 or 4, wherein said motor (M) is provided on a vehicle rearward side of said center battery unit (BY1), a speed-changing gear or a speed-reducing gear (62), to which a rotational force of the motor (M) is inputted, are provided on the vehicle rearward side of the motor (M) and at a driver's-seat side of the vehicle body, and a rear-side battery unit (BY4) to supply the electric power to the motor (M) is provided beside the motor (M) and is positioned behind the assistant-driver's seat (30).

7. The electric automobile of claim 6, wherein a further rear-side battery unit (BY3) to supply the electric power to the motor (M) is provided, the further-side battery unit (BY3) is arranged on a side of the motor (M) opposite the rear battery unit (BY3) and is positioned behind the driver's-seat (40).

8. The electric automobile of claim 6 or 7, wherein the rear-side battery unit (BY4) and/or the further rear-side battery unit (BY3) are installed detachably from the vehicle body.

9. The electric automobile of anyone of claims 6 to 8, wherein the rotational force of the motor (M) outputted from the speed-changing gear or a speed-reducing gear (62) is transferred to the right-and-left rear wheels (8) via a deferential mechanism (63) and drive shafts (60, 61), wherein the motor (4) is arranged closer to the central portion, in the longitudinal direction, of the vehicle than the drive shafts (60, 61), the speed-changing or a speed-reducing gear (62) and the deferential mechanism (63).

10. The electric automobile of anyone of claims 6 to 9, wherein the rear-side battery unit (BY4) and the further rear-side battery unit (BY3) are provided in a space before the drive shafts (60, 61) when seen in a longitudinal direction of the vehicle.

11. The electric automobile of claim 1, wherein said assistant-driver's-seat side battery unit (BY2) is provided at a vehicle rear-side portion of a floor panel (10) of the vehicle body which is positioned on the assistant-driver's-seat side, and a vehicle front-side portion of the floor panel (10) which is positioned on the assistant-driver's-seat side is set as a foot-placement portion (10a) where feet of the passenger seated in the assistant driver's seat (30) can be placed.

12. The electric automobile of claim 1, wherein further comprising a floor panel (10) forming a floor face of a cabin (R3), a dash panel (20) rising from a front-end portion of the floor panel (10) and forming a front wall of the cabin (R3), an inclined panel (16) extending obliquely upward-and-rearward from a rear-end portion of the floor panel (10), and a tunnel portion (11) provided at a central portion, in the vehicle width direction, of the floor panel (10), protruding upward, and extending in the vehicle longitudinal direction, a front-end portion of the tunnel portion (11) is connected to said dash panel (20) and a rear-end portion of the tunnel portion (10) is connected to said inclined panel (16), wherein said motor (M) is provided in said tunnel portion (11) and below said inclined panel (16), a center battery unit (BY1) to supply electric power to the motor (M) is provided in the tunnel portion (11) and between the motor (M) and the dash panel (20), said assistant-driver's-seat side battery unit (BY2) is provided on the floor panel (10), and the hip point (HP1) of the driver seated in the driver's seat (40), a center, in a longitudinal direction and in a width direction, of the tunnel portion (11), and a gravity center (P1) of the assistant-driver's-seat side battery unit (BY2) are positioned on an identical liner line (L) in a top view.

13. The electric automobile of claim 12, wherein said assistant-driver's-seat side battery unit (BY2) is provided just before the assistant driver's seat (40), an upper-end portion of the assistant-driver's-seat side battery unit (BY2) is located at a lower level than an upper face of a front-end portion of a cushion portion (41) of the assistant driver's seat (40) when seen in a vertical direction of the vehicle, the assistant-driver's-seat side battery unit (BY2) is configured such that a level thereof in the vertical direction becomes lower while going forward towards the vehicle front, and a vehicle front-side portion of the floor panel (10) which is positioned on the forward side of the assistant-driver's-seat side battery unit (BY2) is set as a foot-placement portion (10a) of the passenger seated in the assistant driver's seat (40).
